# EUROPEAN PATENT APPLICATION

(11) **EP 4 300 520 A1**
(43) Date of publication of application: **03.01.2024**
(21) Application number: 22305940.3
(22) Date of filing: 28.06.2022
(51) Int. Cl.: H01F 6/06, H01B 12/00, B64D 41/00

(54) **IMPROVED INDUCTIVE COMPONENT FOR ELECTRIC OR HYBRID AIRCRAFT**

(71) Applicant: Airbus, 31700 Blagnac (FR)
(72) Inventor: STEINER, Gerhard, 82024 Taufkirchen (DE); KAPAUN, Florian, 82024 Taufkirchen (DE); YBANEZ, Ludovic, 31700 Blagnac (FR); SURAPANENI, Ravi Kiran, 31700 Blagnac (FR); GALLA, Gowtham, 31700 Blagnac (FR)
(74) Representative: Cabinet Le Guen Maillet

(57) **Abstract**

The invention relates to an inductive element (100) characterized in that it comprises a stack of at least one first strip (107a) of magnetic material, at least one second strip (105) of superconducting material, and at least one third strip (107b) of magnetic material.

It is thus advantageously possible to obtain an increased ratio between the weight of an aircraft comprising inductive elements such said inductive element (100) and the electrical power available on board for the aircraft systems.

## Description

### TECHNICAL FIELD

The present invention relates to electronic components. The invention relates more particularly to power electronic components and in particular those used in on board systems of an aircraft. At least one embodiment relates to an improved inductive element usable in an aircraft.

### RELATED ART

Liquid hydrogen is a cryogenic fluid that can be used as an energy source for electricity generation. Thus, for example, it is possible to use a hydrogen fuel cell to power all the flight control and communication systems of an aircraft, as well as the on-board lighting and the power supply of various accessory devices used in the aircraft. Liquid hydrogen can also be used as an energy source for the propulsion of an aircraft, by powering a fuel cell or by direct combustion, which has the advantage of only releasing water into the atmosphere. The use of hydrogen requires distribution systems between one or more production or storage tanks and consuming devices. Thus, pipes are conventionally used to convey liquid hydrogen between a storage tank and a liquid hydrogen consuming device such as, for example, a hydrogen fuel cell.

It is known that there is a need to massively reduce the production of carbon emissions, to safeguard the environment, and electric or hybrid propulsion is showing promise for this. But the conventional systems on board of an aircraft are such that the weight/electrical power ratio is not satisfactory as they are and there is therefore a need to obtain electrical systems making it possible to provide power in relation to their weight to satisfy all the constraints.

It is therefore necessary to optimize the weight/electrical power ratio of all the elements of an aircraft propulsion system, and in particular the power components through which strong currents pass.

The situation can be improved.

### SUMMARY OF THE INVENTION

The aim of the invention is to obtain an increased ratio between the weight of an aircraft and the electrical power available on board for the aircraft systems for the purpose of reducing the energy required to perform an aircraft flight. An object of the invention is to use lighter inductive components that can be configured for use on board an electrically or at least partially electrically propelled aircraft.

To this end, it is proposed an inductive element comprising a stack of at least one first strip of magnetic material, at least one second strip of superconducting material, and at least one third strip of magnetic material.

According to an embodiment, said stack successively comprises a plurality of first strips of magnetic material, a plurality of second strips of superconducting material, and a plurality of third strips of magnetic material.

According to an embodiment, each first and second strip of magnetic material is surrounded by an electrically insulating and thermally conductive layer.

Another object of the invention is an inductive component comprising an inductive element as described here-above, configured to form at least one loop of said stack of at least one first strip, at least one second strip and at least one third strip, wound (rolled-up) on itself.

Another object of the invention is an inductive device comprising an inductive element according as previously described, arranged in a cryogenic fluid volume.

Another object of the invention is an inductive device comprising an inductive element as previously described, held in contact with a cold source comprising a cryogenic fluid.

Advantageously, the inductive device is configured to operate a connection between a power converter device and a powertrain.

The invention also relates to an aircraft comprising an inductive element as previously described, or an inductive component as previously described, or an inductive device as previously described.

### BRIEF DESCRIPTION OF THE DRAWINGS

The characteristics of the invention mentioned above, as well as others, will appear more clearly on reading the following description of at least one embodiment, said description being made in relation to the attached drawings, among which:
[Fig. 1] schematically illustrates an inductive element according to an embodiment;
[Fig. 2] schematically illustrates the inductive element already illustrated on Fig. 1 wound on itself to form an inductive solenoid; and,
[Fig. 3] schematically illustrates an aircraft comprising at least an inductive element as illustrated on Fig. 1 or at least a solenoid as illustrated on Fig. 2.

### DETAILED DESCRIPTION OF AT LEAST ONE EMBODIMENT

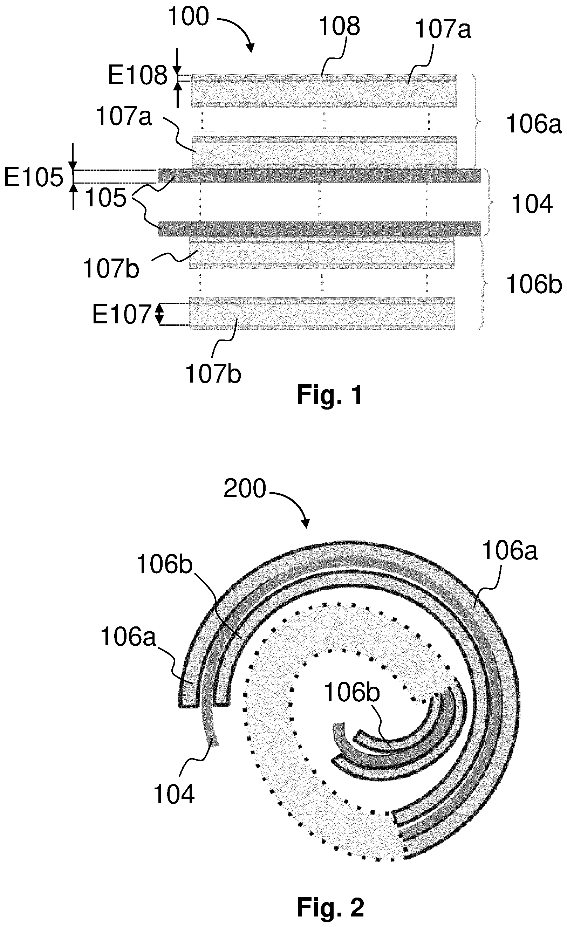

**Fig. 1** schematically illustrates a superconducting inductive element 100 comprising a strip assembly taking the form of a stack of material strips (also called tapes).

According to a first embodiment, the inductive element 100 comprises at least one central strip 105 made of a superconducting material, sandwiched between at least one strip 107a made of a magnetic material, on the one hand, and at least one strip 107b made of a magnetic material, on the other hand. No gap is present between the central strip 105 made of a superconducting material and each of the strip 107a, 107b made of a magnetic material surrounding the central strip 105 made of a superconducting material.

The superconducting material may be High Temperature Superconducting (HTS) material, such as Bismuth Strontium Calcium Copper Oxide (BSCCO), Yttrium Barium Copper Oxide (YBCO), Rare-Earth Barium Copper Oxide (REBCO) or magnesium diboride (MgB2), or Low Temperature Superconducting (LTS) material, such as niobium-tin (Nb3Sn) or niobium-titanium (NbTi).

The magnetic material of the strips 107a, 107b may be soft magnetic material, such as nanocrystalline magnetic material, amorphous magnetic material or ferrites.

The thickness E105 of a strip105 made of a superconducting material is preferably comprised between 1µm and 5mm.

The thickness E107 of a strip107a, 107b made of a magnetic material is comprised between 1µm and 5mm.

The width of the strips 105 made of a superconducting material and of the strips 107a, 107b made of a magnetic material depends on the required inductance of the inductive element 100.According to one embodiment, the inductive element 100 comprises a central plurality 104 of strips 105 made of a superconducting material, sandwiched between an outer plurality 106a of strips 107a made of a magnetic material, on the one hand, and an outer plurality 106b of strips 107b made of a magnetic material, on the other hand. No gap is present between each of the strips 105 made of a superconducting material. No gap is present between each of the strips 107a made of a magnetic material. No gap is present between each of the strips 107b made of a magnetic material.

The plurality 104 of strips 105 made of a superconducting material comprises at least two strips. The number of strips 105 depends on the maximum current for which the inductive element 100 is designed for, and the temperature to which the inductive element 100 is working.

The outer plurality 106a of strips 107a made of a magnetic material may comprise the same or a different number of strips than the outer plurality 106b of strips 107b made of a magnetic material. The plurality 104 of strips 105 made of a superconducting material may comprise the same or a different number of strips than the plurality 106a, 106b of strips 107a, 107b made of a magnetic material.

According to one embodiment, the magnetic material forming the outer plurality 106a of strips 107a is the same as the magnetic material forming the outer plurality 106b of strips 107b. According to an alternative embodiment, these two magnetic materials are different.

According to an embodiment, the different strips are assembled together by gluing.

Each strip 107a, 107b made of a magnetic material is surrounded by an electrically insulating and thermally conductive layer 108. The electrically insulating and thermally conductive layer 108 may be a thin polyamide layer, or an epoxy layer, or realized on an epoxy powder coating, or a ceramic layer, or realized on a ceramic powder coating. The thickness E108 of an electrically insulating and thermally conductive layer 108 depends on the voltage withstand capacity of the inductive element 100. Advantageously, the magnetic strips which surround the superconductive strip form a closed path for the magnetic field which works as a shield for a radiated emission.

According to an embodiment, the inductive element 100 can be arranged in a cryogenic fluid (such as liquid hydrogen, for example) volume or held in contact with a cold source comprising a cryogenic fluid, in order to obtain a superconducting state. In addition, when liquid hydrogen is available in an aircraft, such an inductive element can be used onboard, cooled without requiring an additional cooling liquid, which further reduce the cooling complexity of the assembly.

**Fig. 2** illustrates an inductive component 200 (an electrical or electronical coil) made from the inductive element 100, which is flexible and wound (rolled-up) on itself, so as to form one or more loops. The length of the inductive element 100 is sufficient to allow to form at least one loop. The length of the inductive element 100 depends on the required inductance of the inductive element 100 and on the current carry capacity of the inductive elements, and on the temperature to which the inductive element operates. Advantageously, such an arrangement of the inductive component 200, made from the inductive element 100, offers a high inductance per unit of weight and length. The inductive element 100 may be wound on itself so as to be in the form of a spiral, or so as to be in the form of a square spiral, or so as to be in the form of an oval spiral.

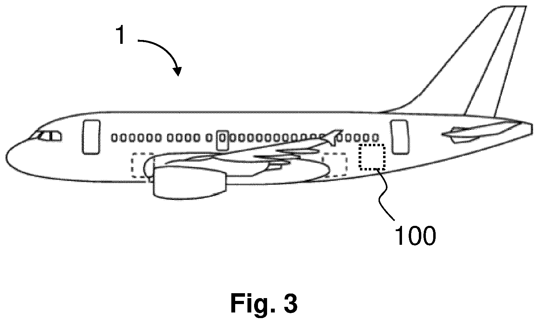

**Fig. 3** illustrates an aircraft 1 which comprises at least one inductive element 100 and/or at least one inductive component 200. Such elements represent a clear advantage for use on board an aircraft, a context in which it is advisable to improve the ratio of weight to available power for the purpose of reducing energy consumption. According to an embodiment, the aircraft 1 is propelled by an electric power unit.

Advantageously, solenoids comprising inductive elements such as the inductive element 100 can be used in power conversion equipment or systems of an or to transport energy between a power conversion device and an aircraft's electric drive unit to avoid the use of heavy and/or bulky components such as in prior art.

## Claims

1. Inductive element (100) **characterized in that** it comprises a stack of at least one first strip (107a) of magnetic material, at least one second strip (105) of superconducting material, and at least one third strip (107b) of magnetic material.

2. Inductive element (100) according to claim 1, wherein said stack successively comprises a plurality (106a) of first strips (107a) of magnetic material, a plurality (104) of second strips (105) of superconducting material, and a plurality (106b) of third strips (107b) of magnetic material.

3. Inductive element (100) according to one of claims 1 and 2, wherein each first and second strip (107a, 107b) of magnetic material is surrounded by an electrically insulating and thermally conductive layer (108).

4. Inductive component (200) comprising an inductive element (100) according to one of claims 1 to 3, flexible and configured to form at least one loop of said stack of at least one first strip (107a), at least one second strip (105) and at least one third strip (107b), wound on itself.

5. Inductive device comprising an inductive element (100) according to one of claims 1 to 3 or an inductive component (200) according to claim 4, the inductive element or the inductive component being arranged in a cryogenic fluid volume.

6. Inductive device comprising an inductive element (100) according to one of claims 1 to 3 or an inductive component (200) according to claim 4, held in contact with a cold source comprising a cryogenic fluid.

7. Inductive device according to any one of claims 5 and 6, configured to operate a connection between a power converter device and a powertrain.

8. Aircraft comprising an inductive element (100) according to one of claims 1 to 3, or an inductive component (200) according to claim 4, or an electronic device according to one of claims 5 to 7.
